**Europäisches Patentamt**

**European Patent Office**

**Office européen des brevets**

(19)

(11) Veröffentlichungsnummer: **0 154 194**

**A2**

(12) # EUROPÄISCHE PATENTANMELDUNG

(21) Anmeldenummer: **85101355.7**

(22) Anmeldetag: **08.02.85**

(51) Int. Cl.⁴: **B 29 C 67/22**
**B 29 C 39/10, A 63 H 9/00**
**//B29K105:04, B29K105:08,**
**B29L31:52**

(30) Priorität: **10.02.84 DE 3404653**

(43) Veröffentlichungstag der Anmeldung:
**11.09.85 Patentblatt 85/37**

(84) Benannte Vertragsstaaten:
**AT BE CH DE FR GB IT LI LU NL SE**

(71) Anmelder: **Moline, Mary**
**Front and County Streets**
**Greensboro, PA 15338(US)**

(72) Erfinder: **Zok, Ursula**
**Luttersiefen 8**
**D-5270 Gummersbach 31(DE)**

(74) Vertreter: **Selting, Günther, Dipl.-Ing. et al,**
**Deichmannhaus am Hauptbahnhof**
**D-5000 Köln 1(DE)**

(54) Verfahren zur Herstellung von dreidimensionalen Spielzeugformlingen.

(57) Die Erfindung betrifft ein Verfahren zur Herstellung von dreidimensionalen Spielzeugformlingen, insb. Puppenköpfen, mit einem weichen Körper und einer Textilhaut. Die Erfindung ist dadurch gekennzeichnet, daß man aus einer nahtlosen, appretierten Filz- oder Wirkwarenbahn durch Warmverformung in einer aus Patrize und Matrize bestehenden Form, die das Modell eines Teiles des herzustellenden Formlings nachbildet, eine profilierte Textilhaut zieht, daß man die profilierte Textilhaut in einer das gleiche Teilmodell nachbildenden offenen Negativform abstützt und deren Öffnung mit einer die Gestalt des herzustellenden Formlings ergänzenden Schalenform verschließt und daß man den Formhohlraum mit einem Reaktionsgemisch ausschäumt, das im Bereich der ergänzenden Schalenform in den Formhohlraum eingebracht wird.

FIG. 4

EP 0 154 194 A2

Croydon Printing Company Ltd.

**Verfahren zur Herstellung von dreidimensionalen Spielzeugformlingen**

Die Erfindung bezieht sich auf ein Verfahren zur Herstellung von dreidimensionalen Spielzeugformlingen, insbesondere Puppenköpfen, mit einem weichen Körper und einer Textilhaut.

Mit den bekannten Verfahren zur Herstellung von dreidimensionalen Spielzeugformlingen, insbesondere Puppenköpfen, aus Textilien war eine Serienfertigung nur von flachen Gesichtern mit eingesteckten Nasen möglich oder es mußten die Puppenköpfe arbeitsintensiv im Nähverfahren angefertigt werden. Die genähten Textilhüllen wurden anschließend mit Watte oder ähnlichem ausgestopft und waren weder formbeständig, noch konnten sie serienmäßig originalgetreu hergestellt werden. Die Möglichkeiten zur individuellen Gestaltung der Gesichter von Puppenköpfen waren vom Zufall abhängig und Modelltreue nicht erreichbar. Reinigungsprozesse waren wegen des Formverlustes problematisch.Diese Probleme wurden teilweise durch ein Verfahren beseitigt, bei dem man eine Halbschale mit Gesichtsprofilierung aus festem Kunststoff herstellt, die anschließend mit einer Textilhaut beklebt wird. Sodann wird der Hinterkopf wie üblich genäht und ausgestopft und an der Gesichtshalbschale befestigt. Auch diese Herstellungsart ist kostenintensiv und die Reinigung ist problematisch.Im übrigen fehlt der starren Gesichtshalbschale der bei Kindern beliebte Kuscheleffekt.

Der Erfindung liegt die Aufgabe zugrunde, ein Verfahren der eingangs erwähnten Art zu schaffen, das es gestattet, Spielzeugformlinge, insbesondere Puppenköpfe, mit einem weichen Körper und einer Textilhaut in arbeits- und kostensparender Serienfertigung unter Beibehaltung der Modelltreue herzustellen, die formbeständig sind und sich beliebig reinigen lassen.

Diese Aufgabe wird dadurch gelöst, daß man aus einer nahtlosen, appretierten Filz- oder Wirkwarenbahn durch Warmverformung in einer aus Patrize und Matrize bestehenden Form, die das Modell eines Teiles des herzustellenden Formlings nachbildet,eine profilierte Textilhaut zieht, daß man die profilierte Textilhaut in einer das gleiche Teilmodell nachbildenden offenen Negativform abstützt und deren Öffnung mit einer die Gestalt des herzustellenden Formlings ergänzenden Schalenform verschließt und daß man den Formhohlraum mit einem Reaktionsgemisch ausschäumt, das im Bereich der ergänzenden Schalenform in den Formhohlraum eingebracht wird.

Mit diesem Verfahren ist eine arbeits- und kostensparende Serienfertigung absolut modellgetreuer, nahtloser Spielzeugformlinge möglich, die sich durch Formbeständigkeit, Waschbarkeit und hohen Spielwert auszeichnen. Die vorprofilierte labile Textilhaut wird von dem Schaumstoffkörper stabilisiert und haftet bleibend verschiebungsfest auf diesem. Das Verfahren eignet sich zur Herstellung beliebiger Erzeugnisse, die einen weichen Körper und eine Textilhaut aufweisen und im Spielwarenbereich genutzt werden sollen.

Eine Hilfe bei der modellgetreuen Vervielfältigung der Spielzeugformlinge sind die offene Negativform, in die die durch Warmverformung gezogene labile Textilhaut eingelegt wird und die ergänzende Schalenform, die dazu dienen, die Expansion des Reaktionsgemisches beispiels- weise aus Polyurethan beim Verschäumungsprozeß in den gesetzten Dimensionen zu halten. Es entsteht der komplette Spielzeugformling, der auf einem Teil seiner Außenfläche mit festhaftender Textilhaut überzogen und im übrigen eine "nackte" Schaumstoffoberfläche aufweist, die mit einem Überzug, z.B. einem Haarteil o.dgl. bedeckt werden kann.

In vorteilhafter Ausgestaltung des erfindungsgemäßen Verfahrens ist vorgesehen, daß man die Innenseite der abgestützten, profilierten Textilhaut vor dem Ausschäumen mit flüssigen Spezialwachsen besprüht, die die Durchlässigkeit der Textilhaut ausreichend vermindern, um zu vermeiden, daß das Reaktionsgemisch diese durchdringt oder tränkt, jedoch zulassen, daß sich der Schaum bei seiner Vernetzung an den festen Teilen der Textilhaut verkrallt und mit dieser verschiebungsfest verbunden wird. Auf diese Weise wird eine wichtige Voraussetzung für die Haltbarkeit und Formbeständigkeit des Spielzeugformlings geschaffen, weil die Isolierung der Innenseite der Textilhaut verhindert, daß das eingespritzte Reaktionsgemisch durch die Textilhaut dringen oder diese tränken kann. Dies würde den Textilhautcharakter verderben und den Spielzeugformling unbrauchbar machen. Zur Verflüssigung der Spezialwachse sind diese zweckmäßigerweise in Chlorwasserstoffen und Benzinen gelöst. Es wird erreicht, daß die Luftdurchlässigkeit der Textilhaut in Verbindung mit der Abdichtung zwischen Negativform und Textilhaut mittels der exakt aufgesetzten ergänzenden Schalenform ausreichend gemindert wird, da sich die verdunstenden Lösungsmittel als Dichtungsschicht bewähren. Der Schaum selbst kann sich ausreichend an den Festpartikeln der Textilhaut innen verkrallen, so daß die Textilhaut sich vom Schaum nicht mehr wegschieben läßt, was zum Beispiel zur problemlosen Reinigung in einer Waschmaschine ohne Deformationsgefahr des Spielzeugformlings beiträgt.

Es ist erfindungsgemäß vorgesehen, daß man die in der offenen Negativform abgestützte profilierte Textilhaut an ihrem offenen Rand mit dem Rand der ergänzenden Schalenform festklemmt, die auf die Öffnung der Ne-gativform aufgesteckt wird. Hierdurch wird die profilierte Textilhaut bei der Verschäumung in Stellung gehalten und die Expansion des Reaktionsgemisches modellgetreu begrenzt.

Vorteilhafterweise ist vorgesehen, daß man in der Profilierung der Negativformfläche Gesicht, Nacken, Hals und Ohren eines Puppenkopfmodelles nachbildet und die Textilhaut in entsprechende Form zieht und daß die ergänzende Schalenform den fehlenden Oberkopf bildet, der nach dem Aushärten des Schaumstoffformlings mit einer Perücke abgedeckt wird. Es ergibt sich die modellgetreue Nachbildung eines mit Textilhaut bedeckten Unterkopfes bis zur Trennlinie entlang des Oberkopfes, der von der ergänzenden Schalenform gestaltet und nach Aushärten des Schaumstoffes mit einer beliebigen Perücke überkappt wird.

Den Hals der profilierten Textilhaut durchsticht man von außen nach innen mit einem Verbindungsstück, das innen befestigt und mit verschäumt wird und das später mit seinem äußeren Teil die Verbindung mit einem Puppenkörper herstellt. Das Verbindungsstück besteht zweckmäßigerweise aus zwei Teilen, wobei der äußere Teil eine an einen Flansch anschließende Rille zur Befestigung des Puppenkörpers aufweist und der innere, durch die Textilhaut nach innen ragende Teil druckknopfartig mit einer Klemmscheibe gesichert wird, die durch den Schaum zusätzlich in Position gehalten wird.

In der Zeichnung ist das Verfahren schematisch veranschaulicht. Es zeigen:

Fign. 1a, 1b, 1c     Seitenansicht, Vorderansicht und Grundriß eines Modells zur Anfertigung der Arbeitsformen,

Fig. 2     einen Schnitt einer Metallform zur Warmverformung der Filz- oder Wirkwarenbahn zur Textilhaut,

Fig. 3     eine Draufsicht der Metallform nach Fig. 2,

Fig. 4     einen Schnitt durch die Negativform mit ergänzender Schalenform und

Fig. 5     einen konfektionierten Puppenkopf.

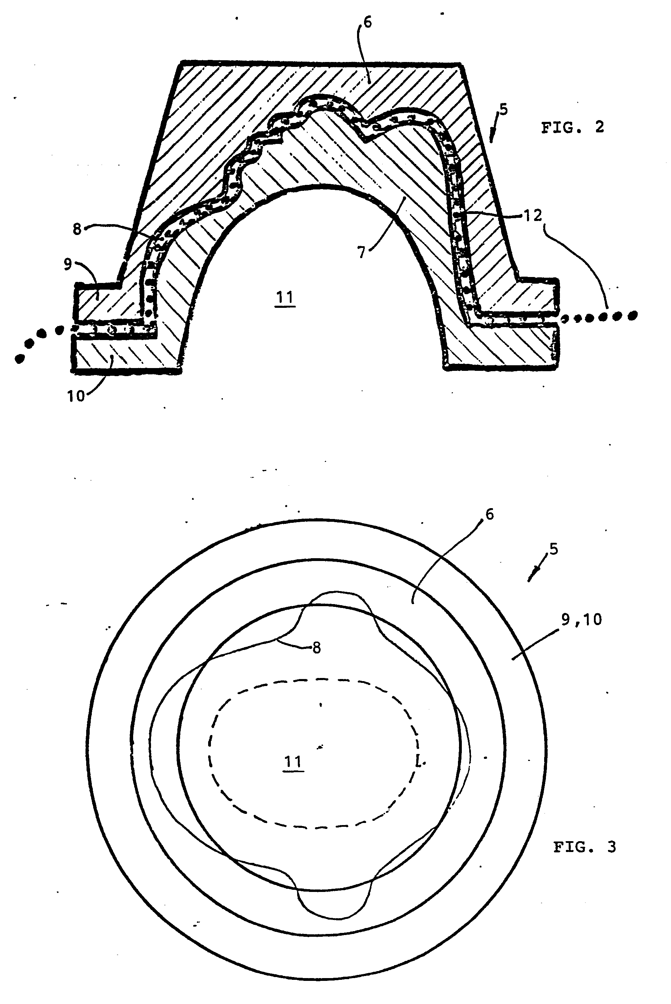

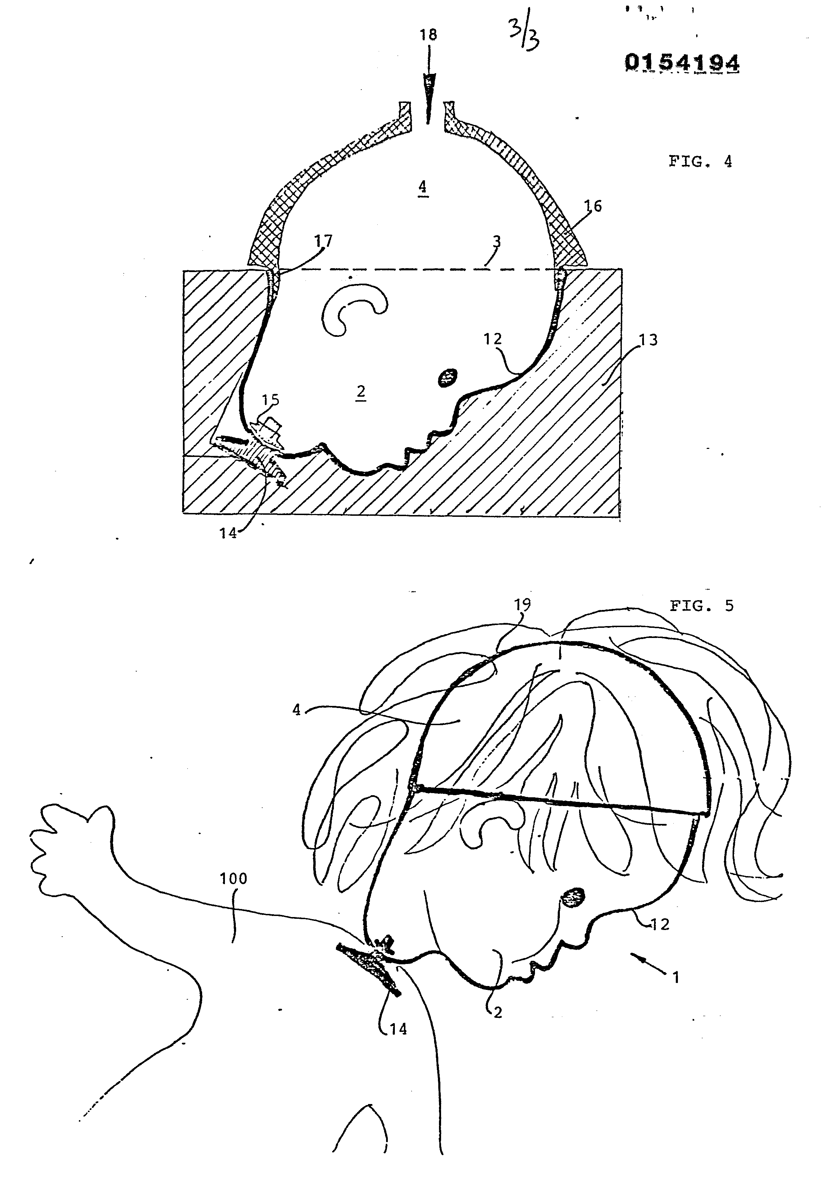

Das Modell des Puppenkopfes 1 besteht aus einem Unterkopf 2, der Gesicht, Nacken, Hals und Ohren bis zur Trennlinie 3 zu dem später entstehenden Oberkopfes 4 (Fig. 4) umfaßt. Es wird eine Metallform 5 (Fig. 2) hergestellt, die aus einer Negativmetallform 6 und einer Positivmetallform 7 zusammengesetzt ist, die einen dem Unterkopf 2 entsprechenden Formhohlraum 8 einschließen und beide einen flachen Kranzabschluß 9,10 aufweisen. In einen Hohlraum 11 der Positivmetallform 7 sind nicht gezeichnete Heizelektroden eingebaut. In den Formhohlraum 8 zwischen den beiden Metallformteilen 6,7 wird ein nahtloses appretiertes Textilvlies 12 eingelegt, das durch Warmverformung in die Form des Unterkopfes 2 gebracht werden soll. Der Kranzabschluß 9,10 an den beiden Formteilen 6,7 dient zum faltenfreien Ziehen des Textilvlieses 12 beim Verformungsprozeß.

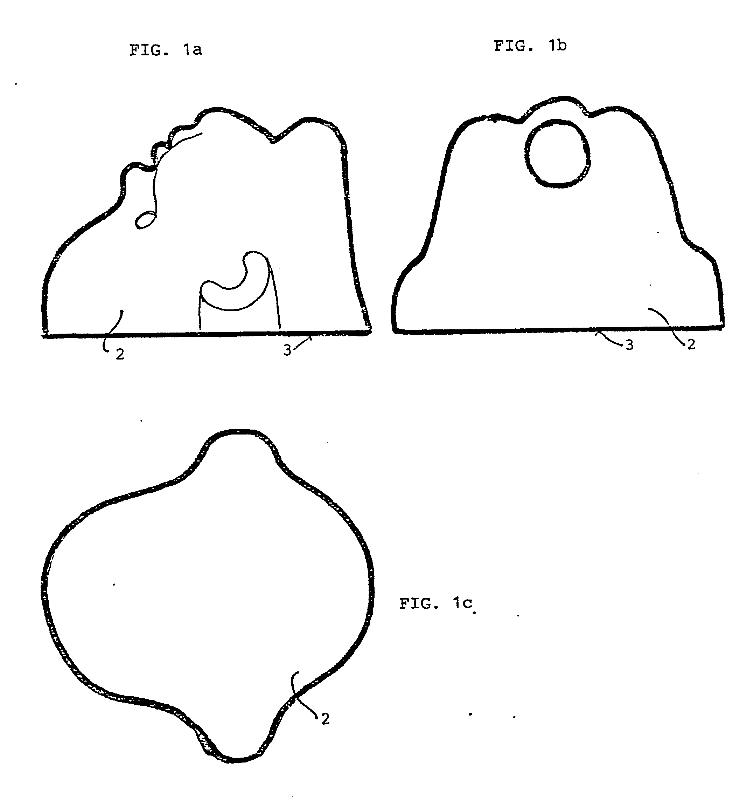

Ferner wird für das erfindungsgemäße Verfahren zur Herstellung von Spielzeugformlingen eine Negativform 13 aus Kunststoff benötigt, deren Formfläche dem Modell des Unterkopfes 2 (Fign. 1a,1b,1c) entspricht und die an der Trennlinie 3 zum Oberkopf 4 glattrandig endet. In die Negativform 13 für den Unterkopf 2 wird das in der Metallform 5 profilierte Textilvlies 12 eingelegt, an dessen Halspartie ein Verbindungsstück 14 zur Verbindung des fertigen Puppenkopfes 1 mit einem Puppenkörper 100 (Fig. 5) durch eine Druckknopfsicherung 15 befestigt ist. Die Negativform 13 wird durch eine Schalenform 16 aus Metall ergänzt, deren Formfläche den Oberkopf 4 darstellt, der den Unterkopf 2 ergänzen muß. Die Schalenform 16 weist einen Einsteckrand 17 auf, mit dem sie in die Öffnung der Negativform 13 so gesteckt wird, daß der Rand des Textilvlieses 12 festgeklemmt ist und beim Ausschäumen des gesamten Formenhohlraums zur Bildung des ganzen Puppenkopfes 1 in einem Arbeitsgang nicht verrutscht. Das Schaummaterial wird durch eine Einschußöffnung 18 am höchsten Punkt der Schalenform 16 in den Formhohlraum eingebracht. Es kann sich um ein Polyurethan-Reaktionsgemisch handeln, dessen Aushärtezeit etwa 2 bis 4 Minuten beträgt und das danach giftfrei ist.

Bevor die Schalenform 16 auf die Negativform 13 aufgesteckt wird, wird die Innenseite des Textilvlieses 12 durch Aufsprühen von Spezialwachsen, die in Chlorwasserstoffen und Benzinen gelöst sind, isoliert, um ein Durchdringen des Schaummaterials durch die Textilhaut zu verhindern, jedoch eine feste, verschiebungssichere Haftung der Textilhaut auf dem Schaumstoffkörper zu ermöglichen.

Der fertige Puppenkopf 1 mit eingeschäumtem Verbindungsstück 14 und anhaftender Textilhaut 12 wird aus der Negativform 13 herausgenommen und auf dem kahlen Oberkopf 4 wird eine Perücke 19 beliebiger Art befestigt.

Die Draufsicht (Grundriß) der Linien Nacken und Stirn sind bei der Metallform 5 länglicher als die entsprechenden Linien der Negativform 13. Bei den Metallformen ist es wichtig, daß untergriffige Stellen vermieden werden, um die Patrize über die Matrize bei der Warmverformung der textilen Rohlinge 12 gleiten zu lassen, während bei der Negativform 13 zur Verschäumung die Linien so verlegt sind, daß nach Fertigstellung der Kopf 1 einen naturnäheren Eindruck bietet.

A n s p r ü c h e

1. Verfahren zur Herstellung von dreidimensionalen
Spielzeugformlingen, insb. Puppenköpfen, mit einem
weichen Körper und einer Textilhaut,
d a d u r c h   g e k e n n z e i c h n e t ,
daß man aus einer nahtlosen, appretierten Filz-
oder Wirkwarenbahn durch Warmverformung in einer
aus Patrize und Matrize bestehenden Form, die das
Modell eines Teiles des herzustellenden Formlings
nachbildet, eine profilierte Textilhaut zieht, daß
man die profilierte Textilhaut in einer das gleiche
Teilmodell nachbildenden offenen Negativform abstützt und deren Öffnung mit einer die Gestalt des
herzustellenden Formlings ergänzenden Schalenform
verschließt und daß man den Formhohlraum mit einem
Reaktionsgemisch ausschäumt, das im Bereich der
ergänzenden Schalenform in den Formhohlraum eingebracht wird.

2. Verfahren nach Anspruch 1, dadurch gekennzeichnet,
daß man die Innenseite der abgestützten, profilierten Textilhaut vor dem Ausschäumen mit flüssigen Spezialwachsen besprüht, die die Durchlässigkeit der Textilhaut ausreichend vermindern, um zu
vermeiden, daß das Reaktionsgemisch diese durchdringt oder tränkt, jedoch zulassen, daß sich der
Schaum bei seiner Vernetzung an den festen Teilen
der Textilhaut verkrallt und mit dieser verschiebungsfest verbunden wird.

3. Verfahren nach den Ansprüchen 1 und 2, dadurch gekennzeichnet, daß man die in der offenen Negativform abgestützte profilierte Textilhaut an ihrem offenen Rand mit dem Rand der ergänzenden Schalenform festklemmt, die auf die Öffnung der Negativform aufgesteckt wird.

4. Verfahren nach einem der Ansprüche 1 bis 3, dadurch gekennzeichnet, daß man in der Profilierung der Negativformfläche Gesicht, Nacken, Hals und Ohren eines Puppenkopfmodelles nachbildet und die Textilhaut in entsprechende Form zieht und daß die ergänzende Schalenform den fehlenden Oberkopf bildet, der nach dem Aushärten des Schaumstoffformlings mit einer Perücke abgedeckt wird.

5. Verfahren nach Anspruch 4, dadurch gekennzeichnet, daß man den Hals der profilierten Textilhaut von außen nach innen mit einem Verbindungsstück durchsticht, das innen befestigt und mitverschäumt wird und das später mit seinem äußeren Teil die Verbindung mit einem Puppenkörper herstellt.

6. Verfahren nach einem der Ansprüche 1 bis 5, dadurch gekennzeichnet, daß man als Wirkwarenbahn beflorte oder unbeflorte Wirkgewebe verwendet.

FIG. 1a

FIG. 1b

FIG. 1c

FIG. 2

FIG. 3

0154194

FIG. 4

FIG. 5